# EUROPEAN PATENT APPLICATION

(11) **EP 1 362 749 A1**
(43) Date of publication of application: **19.11.2003**
(21) Application number: 03008768.8
(22) Date of filing: 22.04.2003
(51) Int. Cl.: B60R 21/20, B60R 13/00

(54) **Airbag cover with attached plastic badge**

(30) Priority: 13.05.2002 US 379913 P
(71) Applicant: Breed Automotive Technology, Inc., Lakeland, Florida 33807 (US)
(72) Inventor: Erwin, Steven J., Port Huron, Michigan 48060 (US); Fonk, Patrick J., Sterling Heights, Michigan 48316 (US)
(74) Representative: Gislon, Gabriele

(57) **Abstract**

An airbag cover (20) has an elastomeric body with a front surface (22) and a rear surface (24). The elastomeric body has an opening (40) extending between the front and rear surfaces and a plurality of mounting projections extending from the rear surface and located about the opening. A badge has a central portion and a mounting flange (64) extending from and about the central portion of the badge. The central portion of the badge extending through the opening (40) in the airbag cover from the rear surface (24) of the airbag cover. The flange (64) of the badge being disposed adjacent the rear surface (24) of the airbag cover proximate the opening (40) with the mounting projections disposed in at least some corresponding mounting openings in the flange. A light source can be provided within the airbag cover to illuminate the badge.

## Description

The present invention relates to an airbag module having a decorative badge and more particularly to a method of attaching the badge to the airbag cover.

Many airbag modules and in particular driver airbag modules utilize a molded elastomeric airbag cover with an emblem designating the manufacturer of the vehicle. US 6 158 764 teaches a decorative emblem having a plurality of extending tabs, which are received through complementary slots in an airbag cover. The emblem is mounted to the airbag cover from the top side of the airbag cover with the extending tabs or legs passed through the slots and later bent over upon the underside of the airbag cover. US 6 149 186 teaches another methodology for attaching an emblem or medallion to an airbag cover in which a coined metal decorative badge or tab having extending pins wherein the ends of the pins are later formed into rivet-like connections holding the decorative badge to the airbag cover. The coined metal badge can be replaced by a plastic badge with plastic mounting projections that are heat-staked to the bottom of the airbag cover.

An improvement to tag technology that permits a decorative badge or emblem to be secured to the airbag cover from the underside of the airbag cover is provided in accordance with claim 1. One of the benefits of the present invention is that a light source can be provided within the airbag cover to illuminate the badge.

Figure 1a is an isometric view of the underside of a driver's side airbag cover according to the present invention without a decorative badge.

Figure 1b is an isometric view of the top of a driver's side airbag cover with the decorative badge in place.

Figure 2 is a plan view of the underside of the airbag cover.

Figure 3 is a cross-sectional view through section 3-3 of Figure 2.

Figure 4 shows an alternative embodiment of the invention.

Figure 5 is a cross-sectional view through section 5-5 of Figure 4.

Figure 6 is a top view of a decorative badge used with the present invention.

Figure 7 is a cross-sectional view through section line 7-7 of Figure 6.

Figures 8, 9 and 10 relate to alternate embodiments of the invention.

As used herein and in the claims the terms "rear", "bottom" and "underside" are understood to refer to a surface, or surfaces of an airbag cover that are hidden from view when the airbag cover is installed in its' operative location in a motor vehicle. As used herein and in the claims the terms "front", "top" and "topside" are understood to refer to a surface, or surfaces of an airbag cover that are not hidden from view when the airbag cover is installed in its' operative location in a motor vehicle.

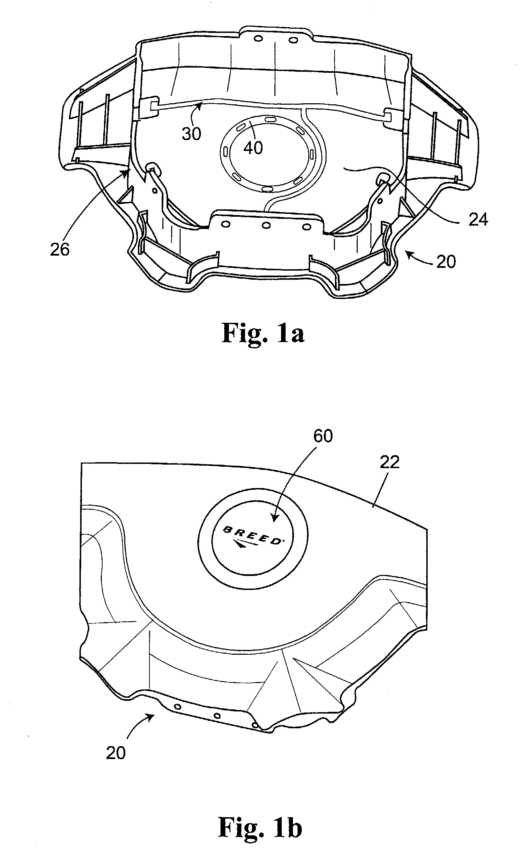

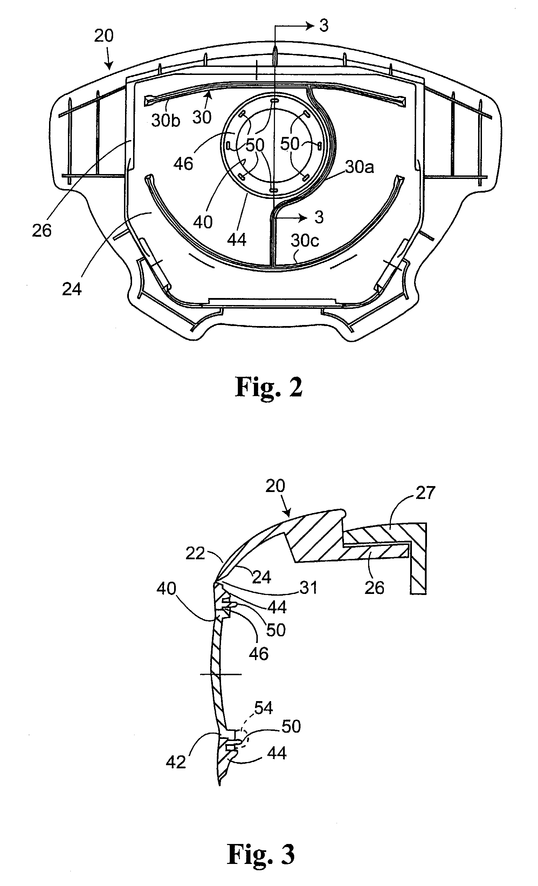

Figures 1-3 illustrate a first embodiment of a driver's side airbag cover 20, which is part of a driver's side airbag module. A driver's side airbag module typically comprises an airbag cover, an airbag, an inflator and a housing. The airbag cover is typically made of a molded elastomer having a front, upper, top or top surface 22 and a rear, bottom, lower or underside or surface 24. Molded into the underside 24, as shown in Figures 1a and 3, is a plurality of secondary features. For example, the airbag cover may be fabricated with a depending wall 26, which may be in the form of a single contiguous wall or a plurality of wall segments, that has features enabling the sides to be attached to a housing 27 as shown in Figure 3. These features may simply be openings through which rivets attach the sides to a complementary wall of the housing or they may include snap-fit features of known variety.

The airbag cover 20 includes one or more tear seams generally designated by numeral 30. The tear seams can include segments 30a, 30b and 30c, which when stressed are pushed open by the inflating airbag defining a passage through which the airbag continues to inflate. As illustrated in Figures 1a and 2, the tear seam 30 includes arcuate tear seams, or tear seam segments, 30b and 30c. A tear seam or tear seam segment 30a connects the other arcuate tear seam segments. A tear seam provides a reduced strength portion, such as reduced thickness portion of the airbag cover 31, as shown in Figure 3, to enable the airbag cover to tear in a controlled manner when impacted by an inflating airbag. Other tear seam arrangements are within the scope of the present invention. The airbag cover 20 includes an opening 40. As will be seen from the description below, a badge 60 is inserted into the opening 40 from the underside of the airbag cover 20 as shown in Figure 1 b or 3.

In Figure 3 the opening 40 is defined by a walled inner or central portion 42 of the airbag cover 20. Peripherally spaced about the opening 40 is a circular outer rim or wall 44. The thickness of the airbag cover within the outer rim 44 can be reduced to define a recess on the underside of the airbag cover into which a badge 60 is placed. That band or ledge portion of the airbag cover between the outer rim and the inner wall is identified by reference numeral 46. The dimension of the inner wall 42 and the outer rim or wall 44 correspond to mating portions of the badge or emblem 60. This rim 44 serves to properly locate the badge relative to the opening 40. While a centrally located circular opening 40 is shown, the shape of the opening, and that of the badge 60, can be any shape. Additionally, the opening can be located on virtually any portion of the airbag cover. The opening 40 will conform to the shape of the badge, which can be varied in size and shape. More than one opening can be used to accommodate badges of varying size and shape.

The underside 24 of the airbag cover in the vicinity of the band 46 has a plurality of integrally formed mounting projections 50 extending therefrom.

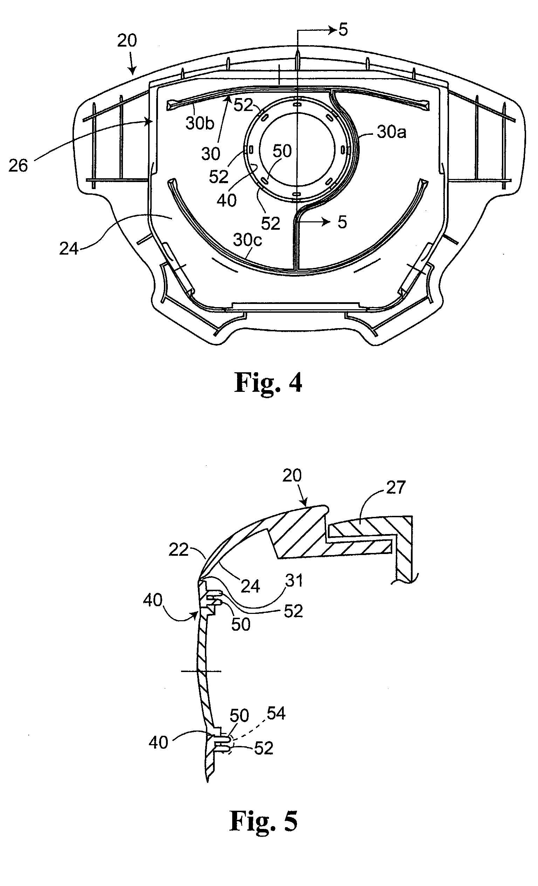

Figures 4 and 5 show an alternative airbag cover 20. In this embodiment the mounting projections are formed in two co-axial rows of mounting projections, an inner row 50 and an outer row 52. The outer row 52 is located at the rim 44 and can be viewed as a higher or more upraised portion of the rim 44.

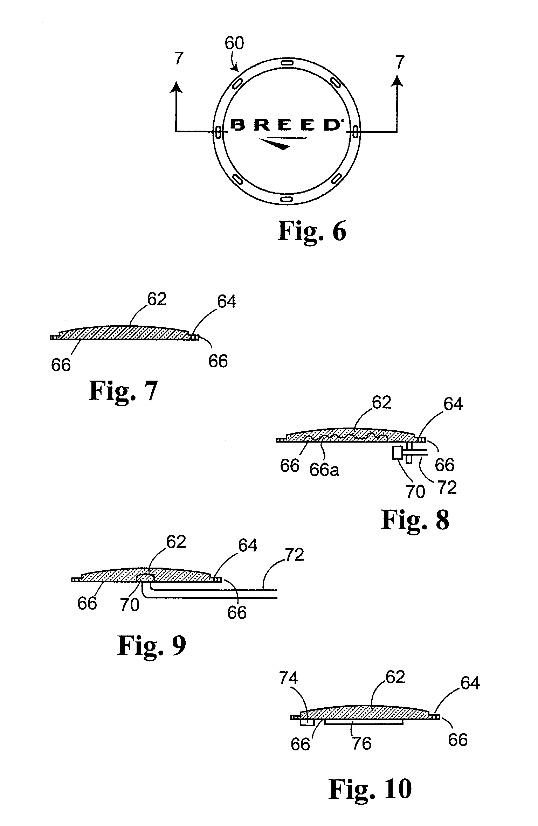

Figures 6 and 7 show the details of the badge 60, which has a central portion 62 and a flange 64 extending from and around the central portion. The central portion 62 is sized to closely fit within the opening 40. When assembled with the airbag cover 20, the flange 64 lies adjacent the band portion 46 of the airbag cover as shown for example in Figure 3. The outer edge 66 of the flange is received within the inner surface of the rim 44. The badge 60 includes a plurality of mounting openings 68. When the badge is properly assembled with the airbag cover each of the mounting projections 50, 52 fit within a corresponding mounting opening 68. Preferably the cross-section of the mounting openings 68 and the cross-section of the mounting projections 50, 52 are similar to enhance a tight fit therebetween.

The badge 60 is secured to the airbag cover by heat staking the mounting projections 50. The top of the each mounting projection 50 will become enlarged forming a rivet-like head 54, as shown in phantom line in Figure 3. During the heat staking an adjacent portion of the rim 44 may also be melted and may become part of the head 54. With regard to the embodiment of Figure 4, upon each staking sets of adjacent mounting projections 50, 52 in each of the inner and outer rows of mounting projections will be melted together to form the rivet-like head 54 shown in phantom line, as shown in Figure 5, which bridges an adjacent portion of the badge.

The badge 60 can be made from various materials and processes. Wood, metal, or plastic can be used. As previously mentioned, one of the benefits of the above construction is the badge can be easily lit. In one embodiment the badge can be made from a clear plastic such as Lucite ®. The lower surface 66 can be shaped or embossed to present a company's name, which can later be painted. However, certain portions of the badge can be left clear. If a source of illumination such as 70 were placed under the badge it would backlight the clear portions of the badge.

For example, Figure 8 shows an LED 70 mechanically suspended from the rear surface 66 of the badge 50. When electrical energy is applied to the wires 72 of the LED, it glows. Reference numeral 66a indicates a portion of the underside of the badge that has been embossed with a design, which can be painted and is visible from the front of the badge; as mentioned other portions of the badge are left undisturbed so light can shine through. Figure 9 shows an LED 70 that has been insert molded within a light-transmitting body of the badge. In Figure 10 one or more layers of one or more electro-luminescent film(s) 74, 76 have been attached to the underside 66 of the badge 50. When energized the badge will appear to glow with one of more different colors. Additionally for the purpose of illustration numbers 74 and/or 76 can also be fiber optic cables, which can be used to illuminate the underside of the badge 50.

## Claims

1. An airbag cover (20) comprising:
an elastomeric body having a front surface (22) and a rear surface (24), the body having an opening (40) extending between the front and rear surfaces and a plurality of mounting projections (50) extending from the rear surface and located about the opening; and
a badge (60) that has a central portion (62) and a flange (64) extending from and around the central portion, the central portion fitting through the opening (40) from the rear surface with the flange adjoining the rear surface (24) proximate the opening with the mounting projections (50) disposed in corresponding mounting openings in the flange.

2. An airbag cover (20) as defined in Claim 1 wherein the airbag cover includes on its rear surface (24) locating means for locating the badge relative to the opening (40).

3. An airbag cover (20) as defined in Claim 2 wherein the locating means includes a plurality of wall segments.

4. An airbag cover (20) as defined in Claim 2 wherein locating means includes a singular wall.

5. An airbag cover (20) as defined in any of claims 1 - 4 wherein the central portion (62) of the badge includes indicia mounted in a material that transmits light.

6. An airbag cover (20) as defined in Claim 5 including a source of light for illuminating the central portion (62) of the badge.

7. An airbag cover (20) as defined in Claim 6 further comprising a light transmitting element located proximate the opening to shine light upon the material that transmits light.

8. An airbag cover (20) as defined in Claim 6 wherein the source of light includes one of an LED, a fiber optic cable and an electro-luminescent layer positioned about the opening.

9. An airbag cover (20) as defined in any of claims 1 - 8 wherein ends of at least some of the mounting projections (50) have a rivet head structure to secure the badge (60) to the rear surface (64) of the airbag cover.
